(19) Europäisches Patentamt
European Patent Office
Office européen des brevets

(11) EP 3 184 805 A1

(12) EUROPEAN PATENT APPLICATION
published in accordance with Art. 153(4) EPC

(43) Date of publication:
28.06.2017 Bulletin 2017/26

(51) Int Cl.:
F02P 23/04 (2006.01)     F02B 11/00 (2006.01)
F02B 23/08 (2006.01)     F02P 13/00 (2006.01)

(21) Application number: 15833987.9

(22) Date of filing: 21.08.2015

(86) International application number:
PCT/JP2015/073456

(87) International publication number:
WO 2016/027873 (25.02.2016 Gazette 2016/08)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 21.08.2014  JP 2014168870
06.12.2014  JP 2014247500

(71) Applicant: Imagineering, Inc.
Kobe-shi, Hyogo 650-0047 (JP)

(72) Inventor: IKEDA Yuji
Kobe-shi
Hyogo 650-0047 (JP)

(74) Representative: Smith, Matthew et al
Mewburn Ellis LLP
City Tower
40 Basinghall Street
London EC2V 5DE (GB)

(54) **COMPRESSION-IGNITION TYPE INTERNAL COMBUSTION ENGINE, AND INTERNAL COMBUSTION ENGINE**

(57) A compression-ignition type internal combustion engine that burns a gaseous fuel, improves an ignition performance not only at a center part of the combustion chamber but also at an outer edge part. The compression-ignition engine comprises an electromagnetic wave generator configured to generate an electromagnetic wave, a controller configured to control the electromagnetic wave generator, and a plasma generator comprising a boosting circuit that constitutes a resonator configured to boost the electromagnetic wave, a first electrode configured to receive an output from the boosting circuit, and a second electrode provided to a vicinity of the first electrode, and the plasma generator is configured such that the first electrode is extruded and exposed toward a combustion chamber of the internal combustion engine, and a plurality of plasma generators are provided.

Fig. 1

## Description

## TECHNICAL FIELD

The present invention relates to an internal combustion engine, specifically, a compression-ignition engine such as a diesel engine that burns a gaseous fuel such as CNG, i.e., Compressed Natural Gas, and a spark ignition engine such as a gasoline engine.

## BACKGROUND ART

The diesel engine that is one kind of the compression-ignition engines ignites by injecting liquid fuel into air becoming in high temperature at the compression process. The diesel engine is excellent in efficiency and applied to various fuels such as petroleum fuel, for example, diesel oil and fuel oil, or liquid fuel such as squalene and ester. Further, the diesel engine has an advantage that it can be applied to various kind of engines widely from small sized engine in high speed through gigantic sized ship engine in low speed.

However, in the case of the diesel engine, there are defects such as occurrence of NOx exhaust gas or soot. On the other hand, CNG draws public strong attention as the fuel for being able to reduce the diesel exhaust gas. However, CNG has the ignition temperature in high compared to the diesel oil. Therefore, since it is impossible to operate the conventional diesel engine by CNG fuel, it has been suggested that the diesel oil as an example is adopted as the pilot fuel, or the ignition means such as the ignition plug is adopted (Non-Patent Document 1).

## PRIOR ART DOCUMENT

## PATENT DOCUMENT(S)

Patent Document: Japanese unexamined patent application publication No. 2013-057279
Patent Document: US Patent Publication No. 7963262
Non-Patent Document 1: "Development of Large Gas Engine with High Efficiency, Mitsui Engineering & Shipbuilding Co., Ltd. (MES), technical review No. 191 (2007-6), Page 19-25)

## SUMMARY OF INVENTION

## PROBLEMS TO BE SOLVED

However, as indicated in Patent Document 1, for example, the flame propagation speed in the diesel engine is slower than that of the gasoline engine. Accordingly, although the center part of the combustion chamber can be ignited by the ignition plug, the ignition at the outer edge part may not be performed sufficiently In the spark ignition engine, similar problem is also indicated.

The present invention is made from the viewpoint of the above.

A compression-ignition type internal combustion engine that burns a gaseous fuel comprises an electromagnetic wave generator configured to generate an electromagnetic wave, a controller configured to control the electromagnetic wave generator, and a plasma generator comprising a boosting circuit that constitutes a resonator configured to boost the electromagnetic wave, a first electrode configured to receive an output from the boosting circuit, and a second electrode provided to a vicinity of the first electrode, and the plasma generator is configured such that the first electrode is extruded and exposed toward a combustion chamber of the internal combustion engine, and a plurality of plasma generators are provided.

## EFFECT OF INVENTION

According to the present invention, an ignition performance not only at a center part of the combustion chamber but also at an outer edge part can be improved in a compression-ignition engine that burns a gaseous fuel.

## BRIEF EXPLANATION OF THE DRAWINGS

Fig. 1 illustrates a structure of a diesel engine 10.
Fig. 2 illustrates a bottom view of a cylinder head of the diesel engine 10.
Fig. 3 illustrates a front view of a partial cross section that shows a structure of an igniter 3.
Fig. 4 is an equivalent circuit of the igniter 3.
Fig. 5 is a time chart that explains a control performed by a controller 41.
Fig. 6 is a view that illustrates a structure of a diesel engine 100.
Fig. 7 is a view that illustrates a structure of an injector unit 6.
Fig. 8 is a bottom view of a cylinder head of the diesel engine 100.
Fig. 9 is a time chart that explains the control performed by the controller 41.

## DESCRIPTION OF THE PREFERRED EMBODIEMENTS

In below, embodiments of the present invention are illustrated in details, based on figures. Note that, the following embodiments are essentially desirable examples, and the scope of the present invention, the application product, or the use thereof does not intend to be limited.

(First embodiment) Ignition Device

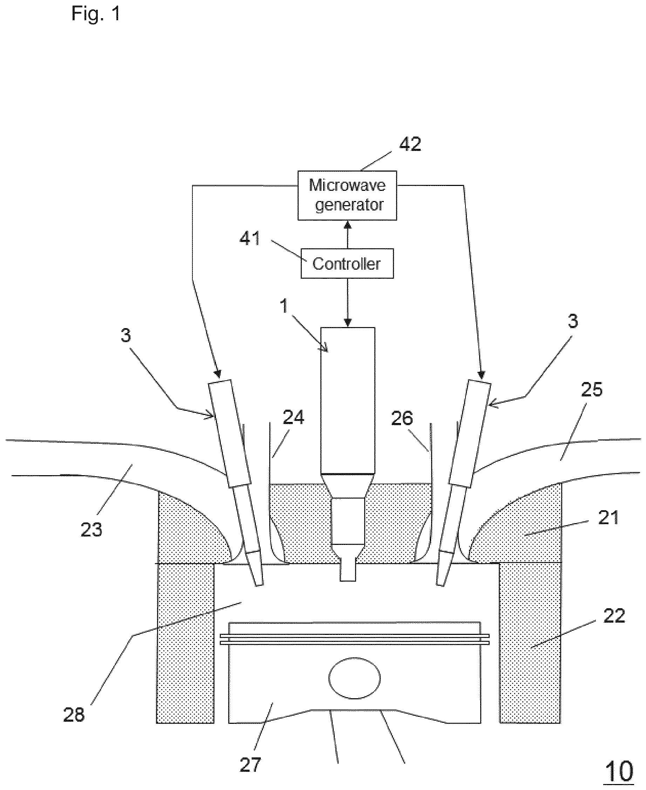

Fig. 1 illustrates a diesel engine 10 structure. The diesel engine 10 illustrates one example of a compression-ignition type internal combustion engine of the present invention. Regarding an engine main body part, Fig. 1 illustrates a front cross sectional view of a partial cross section. Into a cylinder head 21 of the diesel engine 10, an injector 1 configured to inject CNG fuel toward a combustion chamber 28 is inserted.

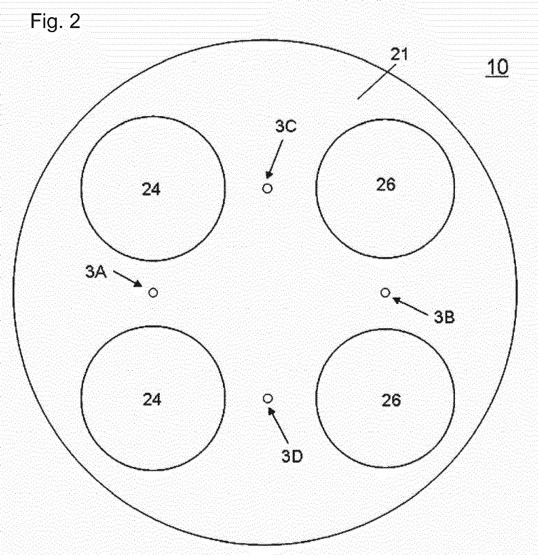

Moreover, a plurality of igniters 3, specifically, 3A through 3D, are respectively inserted into each insert hole of the cylinder head 21. As illustrated in a bottom view of the cylinder head 21 of Fig. 2, an igniter 3A is arranged on a point A between intake ports 24, an igniter 3B is arranged on a point B between exhaust ports 26, an igniter 3C and 3D are respectively arranged on a point C and a point D between the intake port 24 and the exhaust port 26, i.e., a total of four igniters are arranged. By arranging four igniters at a location that is distant away from the injector 1, multi-points ignition can be achieved, a flame propagation distance can be reduced, an initial combustion period of time and a main combustion period of time can be shortened, and a stabilization can be achieved. Moreover, the flame propagation is completed before reaching to an auto-ignition by reduction of the flame propagation distance, and therefore, "knocking" phenomenon can be suppressed. It is also expected of obtaining an effect that the flame propagates toward a center of the combustion chamber, and a heat loss at a cylinder wall surface at a low temperature can be reduced, and a thermal efficiency improvement can be achieved. Moreover, NOx emission can also be suppressed.

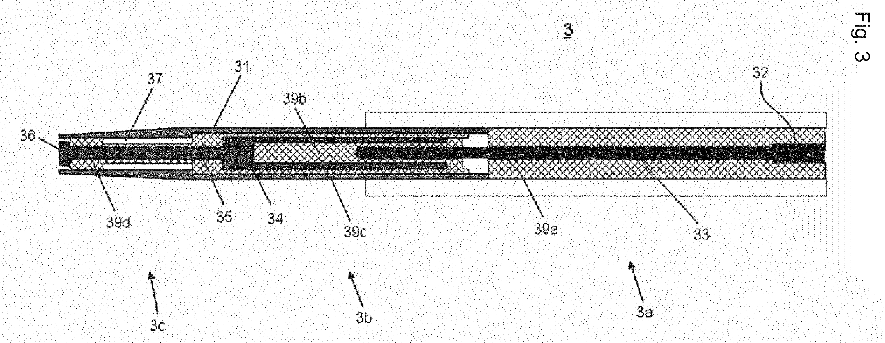

By referring to Fig. 3, a structure of an igniter 3 is explained in details. The igniter 3 divides into three parts, an input part 3a, a coupling part 3b, and an amplification/discharge part 3c. The input part 3a is configured to input a microwave, the coupling part 3b is configured to perform a capacitive coupling in order to, for example, attain an impedance matching between the inputted microwave and the igniter 3, and the amplification/discharge part 3c is configured to amplify a voltage and perform a discharge. Respective parts of the igniter 3 are housed inside a casing 31 that is composed of a conductive metal.

The input part 3a includes an input terminal 32 configured to input a microwave generated at an outside oscillation circuit and a first center electrode 33. The first center electrode 33 transmits the microwave. A dielectric 39a composed of, for example, ceramics, is provided between the first center electrode 33 and the casing 31.

The coupling part 3b includes the first center electrode 33 and a second center electrode 34. The coupling part 3b specializes in attaining an impedance matching between the oscillation circuit and the igniter 3. The second center electrode 34 has a cylindrical structure with a bottom at the amplification/discharge part 3c side, and the cylindrical part surrounds the first center electrode 33. The first center electrode 33 with stick type and the inner wall of the cylindrical part of the second center electrode 34 oppose to each other, and the microwave from the first center electrode 33 is transmitted to the second center electrode 34 at the opposing part by the capacitive coupling. At the cylindrical part of the second center electrode 34, a dielectric 39b such as ceramics is filled with, and a dielectric 39c such as ceramics is provided between the second center electrode 34 and the casing 31.

The amplification/discharge part 3c includes a third center electrode 35 and a discharge electrode 36. The third center electrode 35 is connected to the second center electrode 34, and the microwave in the second center electrode 34 is transmitted from the second center electrode 34 to the third center electrode 35. The discharge electrode 36 is mounted to a distal end of the third center electrode 35. The third center electrode 35 has a coil element, and the microwave potential gradually becomes higher with passage through the third center electrode 35. As a result, high voltage, some tens of KV, is generated between the discharge electrode 36 and the casing 31, and eventually, the discharge is caused between the discharge electrode 36 and the casing 31.

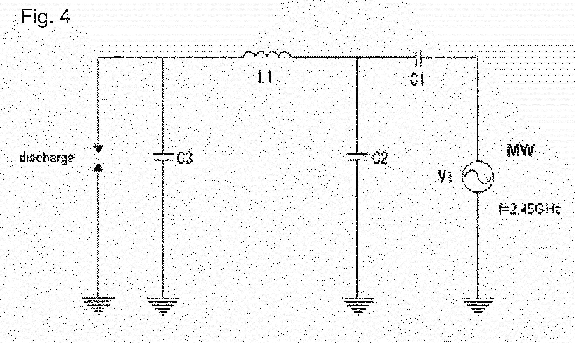

Fig. 4 illustrates an equivalent circuit of the igniter 3. The microwave inputted from the outside oscillation circuit MW, voltage V1, frequency 2.45 GHz, is connected to a resonance circuit that is constituted of a capacitor C3, a reactance L, and a capacitor C2, via a capacitor C1. Further, the discharger is provided aligning in parallel with the capacitor C3.

Here, C1 corresponds to a coupling capacitor, and C1 is determined mainly by a positional relation between the second center electrode 34 and the first center electrode 33, i.e., distance between both the electrodes and an opposing area therebetween, and a filler that fills between the electrodes, in the present embodiment, the ceramic type dielectric 39b. The first center electrode 33 may be constituted slidably in an axial direction in order to adjust the impedance easily

The capacitor C2 is a grounding (earth) capacitor that is formed by the second center electrode 34 and the casing 31. C2 is determined by the distance between the second center electrode 34 and the casing 31, the opposing area therebetween, and also a constant of the dielectric 39c. The casing 31 is composed of the conductive metal, and functions as a ground electrode.

Reactance L corresponds to a coil element of the third center electrode 35.

The capacitor C3 is a discharge capacitor that is formed by the third center electrode 35, the discharge electrode 36, and the casing 31. C3 is determined by such as (1) shape and size of the discharge electrode 36, and distance from/to the casing 31, (2) distance between the third center electrode 35 and the casing 31, and (3) cavity (air) 37 formed between the third center electrode 35 and the casing 31 and a thickness of a dielectric 39d. If C2≫C3, the potential difference of both the ends of the capacitor C3 can significantly become larger than V1, and as a result, the discharge electrode 36 can be introduced to a high potential. Moreover, C3 can become sized in small, and therefore, the capacitor area also can be made smaller. Note that, of the third center electrode 35 and the casing 31, in fact, the capacitor C3 is determined by the opposing part that sandwitchs the dielectric 39. Conversely, the capacitor C3 can be adjusted by changing a length of the cavity (air) 37 in the axial direction.

If the coupling capacitor C1 is deemed to be small enough, the capacitor C3, the reactance L, and the capacitor C2 form a series-resonance-circuit, and a resonance frequency f is expressed in a mathematical formula 1.

(formula 1)

$$f = \frac{1}{2\pi\sqrt{LC}}$$

In the formula,

$$\frac{1}{C} = \frac{1}{C_2} + \frac{1}{C_3}$$

In other words, if f=2.45 GHz, the igniter 3 is designed such that the discharge capacitor C3, the coil reactance L, and the grounding capacitor C2 satisfy the relation of the formula 1.

As described above, the igniter 3 generates a voltage Vc3 higher than a power source voltage, V1 of the microwave inputted into the igniter 3 by a boosting system via resonator. Thereby, the discharge is caused between the discharge electrode 36 and the ground electrode (casing 31). If the discharge voltage exceeds a breakdown voltage of gaseous molecules in the vicinity thereof, electrons are released from gaseous molecules, non-equilibrium plasma is generated, and fuel is ignited.

Since the frequency with 2.45 GHz band is adopted, large capacitance of the capacitor is not required, i.e., it is sufficient with smaller capacitor, and the igniter 3 is effective in the whole device downsize. Moreover, the boosting system is adopted, and as result, only the vicinity of the discharge electrode 36 of the igniter 3 becomes high potential. Therefore, an isolation performance is also excellent. From these viewpoints, the igniter of the present invention is more excellent than the conventional igniter with resonator, for example, Patent Document 2.

Again, referring to Fig. 1, a controller 41 controls an injection timing and an injection pressure (an injection size) of the injector 1, and also controls a microwave generator 42. The microwave generator 42 includes an oscillator configured to oscillate an AC signal, alternating current signal with 2.45 GHz, a circuit configured to control ON/OFF the microwave, and an amplification circuit configured to amplify the microwave generated at a power source of automotive battery, for example, direct current 12V so as to match with an input voltage specification of the igniter 3. In other words, the controller 41 indirectly controls the igniter 3 by controlling the microwave generator 42. Conversely, a discharge timing of the igniter 3 can freely be controlled by controlling a microwave generation timing of the microwave generator 42. In the generally-used spark plug that uses the ignition coil having a large reactance, a first response in speed is difficult in performance, and a continuous discharge performance is also difficult. On the other hand, in the igniter 3 of the present invention, the first response in speed can be possible in performance since the igniter 3 is driven by the microwave. Further, by controlling the microwave generator 42 freely, exactly like a continuous discharge can be caused in high frequency at an arbitral timing. Accordingly, below described various controls can be performed, and in that point, the igniter 3 differs from the conventional spark plug.

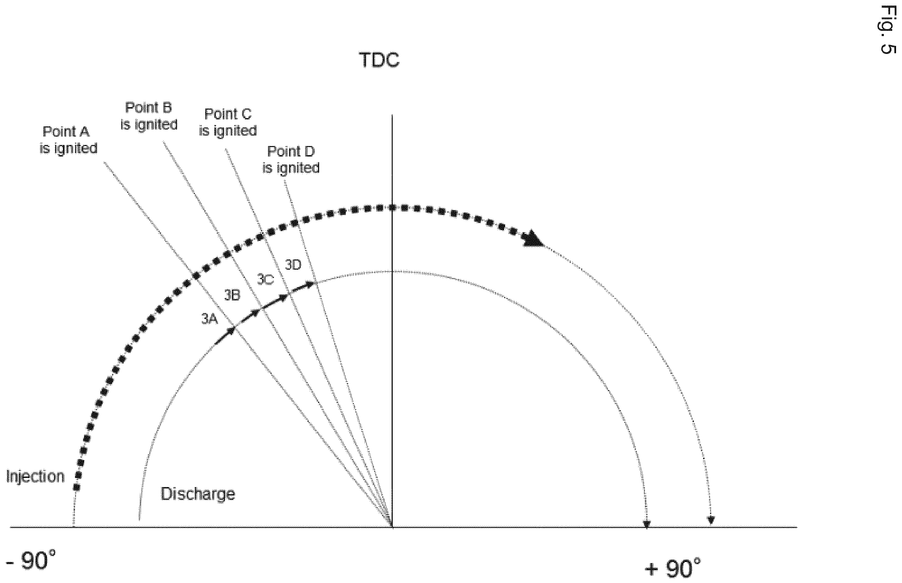

Here, next, referring to Fig. 5, a control example performed by the controller 41 is explained. The controller 41 controls the injector 1 such that the CNG fuel injection is started at a timing of a crank angle of a piston 27 reaching to around over -90 degree. It is controlled such that the igniter 3A firstly performs a discharge after starting of injection performance by the injector 1. The vicinity of the igniter 3A, i.e., the point A is earlier ignited. Next, similarly with that, discharge is performed in the order of 3B, 3C, and 3D and accordingly ignited at the point B, C, and D sequentially in this order. Four igniters may be discharged simultaneously, but in this case, four microwave generators 42 are required, and the cost performance for system is totally expensive. Here, giving a thought for a discharge time period, the period of time for performing the discharge necessary for ignition is not long term. Therefore, in the present embodiment, one microwave generator 42 is used, and the igniter to discharge is switched sequentially starting from first to fourth.

A method of switching the igniter is considered for example by switching sequentially, another by sweeping the oscillation frequency of the microwave generator 42 by taking into consideration of a characteristic that the igniter has an independent different resonance frequency, or further another by using a reflection wave that is generated inside the igniter 3 as a signal source for other igniter 3.

The igniter 3 is driven by the microwave, and therefore, the discharge is performed at a cycle of microwave (GHz). Accordingly, next timing discharge is performed before generated radicals are destructed, and therefore, generated OH radicals and etc. are maintained without destruction. On the other hand, in the conventional spark plug, spark ON/OFF at high frequency cannot be performed, and therefore, once generated radicals soon go to destruct. Accordingly, if the conventional spark plug is used, the above described effect cannot be obtained. In the present embodiment, by use of the igniter 3, the above described multi-points ignition can be achieved.

(Second embodiment)

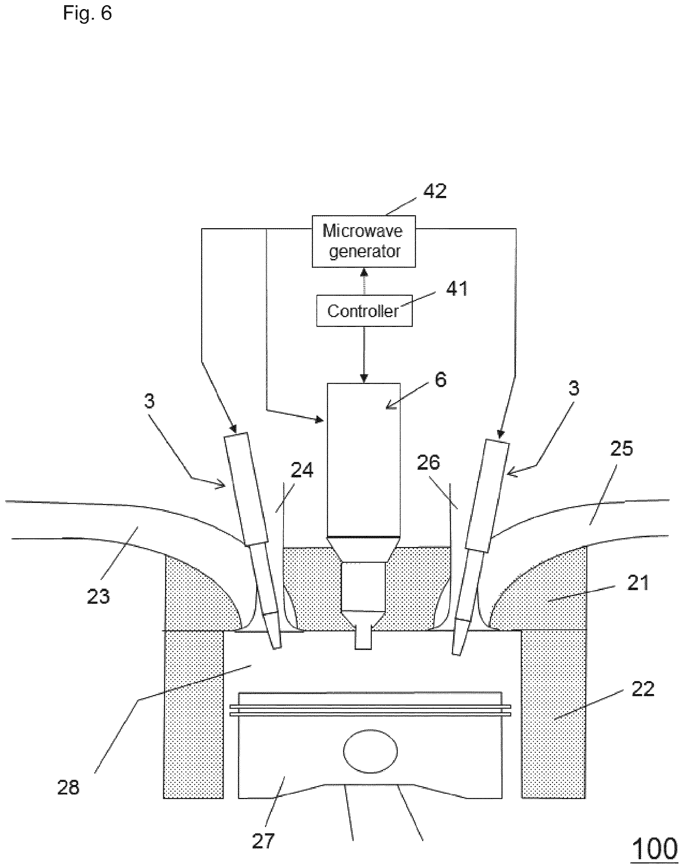

Fig. 6 illustrates a diesel engine 100 structure regarding the second embodiment. A front cross sectional view of a partial cross section regarding the engine main body part is illustrated. Into the cylinder head 21 of the diesel engine 100, an injector unit 6 that includes an injector configured to inject CNG fuel to the combustion chamber 28 and an igniter configured to ignite the fuel is inserted.

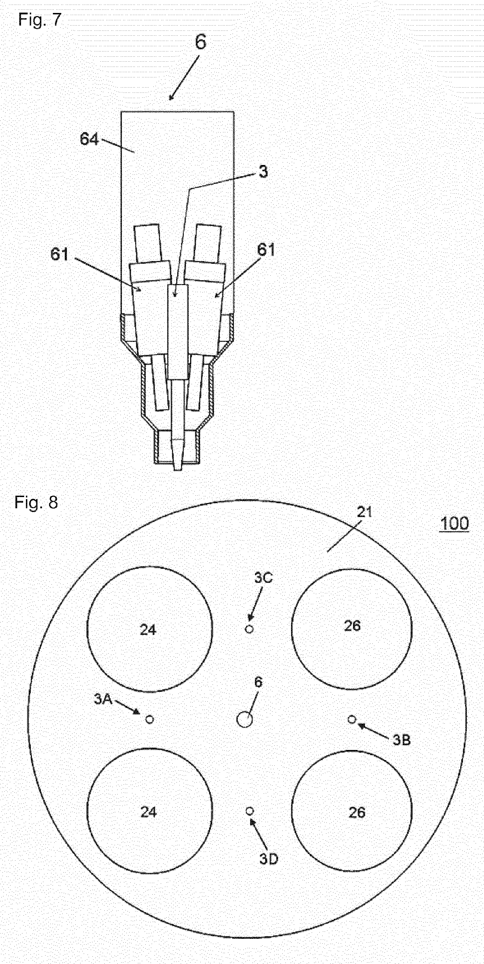

Fig. 7 is a front view of a partial cross section that illustrates a structure of the injector unit 6. The injector unit 6 includes injectors 61, the igniter 3, and a casing 64 housing them inside.

The igniter 3 is arranged on a center axis of the casing 64, and two injectors 61 are arranged adjacent to the igniter 3.

The injectors 61 are built together with the igniter 3, and therefore, a downsized type one is selected. By the downsize, a fuel injected amount is reduced. Therefore, so as to compensate the reduced amount, the injector unit 6 uses a plurality of (two) injectors.

Again, turning back to Fig. 6, in the diesel engine 10, in addition to the igniter 3 housed inside the injector unit 6, further more igniters are inserted into insert holes of the cylinder head 21. As illustrated in a bottom view of the cylinder head 21 of Figure 8, in addition to the igniter 3 (injector unit 6) in the center part, an igniter 3A at the point A between the intake ports 24, an igniter 3B at the point B between the exhaust ports 26, igniter 3C, 3D at the points C and D between the intake port 24 and the exhaust port 26, i.e., a total of five igniters are arranged.

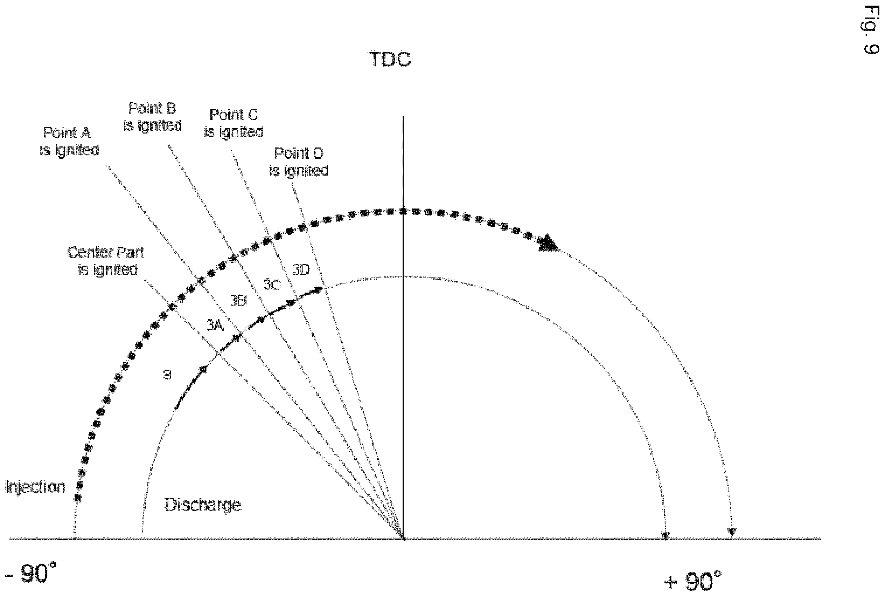

Fig. 9 illustrates a control example performed by the controller 41. The controller 41 controls such that firstly the igniter 3 performs the discharge, and the center part of the combustion chamber 28 where is a part provided with the injector 1 is earlier ignited. Next, other igniters perform discharge sequentially in the order of igniter 3A, the igniter 3B, the igniter 3C, and the igniter 3D, and ignited at the point A, B, C, and D sequentially in this order.

Multi-points ignition can be achieved also in the present embodiment, the flame propagation distance can be reduced, the initial combustion period of time and the main combustion period of time can be shortened, and the stabilization can be achieved.

(Third embodiment)

In the above embodiments, each igniter takes turn for ignition according to the control of the controller 41. On the other hand, reflection wave from the igniter 3 may be utilized to ignite sequentially among the respective injectors. If the discharge is performed at the discharge electrode 36 of the igniter 3, at that moment, the impedance matching inside the igniter 3 falls out of phase, i.e., deformed, and the reflection wave is generated. In other words, the microwave flows in a reversed direction from the tip part, i.e., the amplification/discharge part 3c, to the rear part, i.e., the input part 3a. By the characteristic, the reflection wave is successively introduced to the igniter 3, and the reflection wave can efficiently be utilized. In other words, the igniters 3A, 3B, 3C, and 3D are electrically connected in series, the igniter 3B uses the reflection microwave from the igniter 3A as the power source, and the igniter 3C uses the reflection microwave from the igniter 3B as the power source, and thereby, the timing control by the controller 4 becomes unnecessary. Moreover, if the control of the igniter 3 is tried to be performed by using a single power source, switching in first speed is difficult; however, by using the above-mentioned characteristic, the igniter for ignition can be switched in first speed. Note that, the present embodiments can be applied to not only compression-ignition engine but also the spark ignition engine such as gasoline engine.

As above, the present embodiments are described. The scope of the present invention is determined based on inventions described in the claims. The scope of the present invention should not be limited to the present embodiments.

For example, the igniter 3 is not limited to the above, and other type plug such as a corona discharge plug, for example, "EcoFlash"®, registered trademark in US owned by BorgWarner Inc. may be utilized. Note that, continuous-discharge-possible-igniter in high frequency is preferably to used in order to obtain an effect illustrated in the above embodiments.

Moreover, the igniter 3 is operated by the microwave; however, the electromagnetic wave that has other band may be used.

**EXPLANATION OF REFERENCES**

| 1 | Injector |
|---|---|
| 3 | Igniter |
| 3a | Input Part |
| 3b | Coupling Part |
| 3c | Amplification/Discharge Part |
| 31 | Casing (Ground Electrode) |
| 32 | Microwave Input Terminal |
| 33 | First Center Electrode |
| 34 | Second Center Electrode |

| 35 | Third Center Electrode |
| 36 | Discharge Electrode |
| 37 | Cavity |
| 39 | Dielectric |
| 6 | Injector Unit |
| 61 | Injector |
| 64 | Casing |
| 10 | Diesel Engine |
| 41 | Controller |
| 42 | Microwave Generator |
| 100 | Diesel Engine |

**Claims**

1. A compression-ignition type internal combustion engine that burns a gaseous fuel comprising:

   an electromagnetic wave generator configured to generate an electromagnetic wave;
   a controller configured to control the electromagnetic wave generator; and
   a plasma generator comprising a boosting circuit that constitutes a resonator configured to boost the electromagnetic wave, a first electrode configured to receive an output from the boosting circuit, and a second electrode provided to a vicinity of the first electrode,
   wherein the plasma generator is configured such that the first electrode is extruded and exposed toward a combustion chamber of the internal combustion engine, and a plurality of plasma generators are provided.

2. The internal combustion engine according to claim 1, further comprising intake ports and exhaust ports each formed on a ceiling surface of the combustion chamber, wherein the plasma generator is arranged between the intake ports, between the exhaust ports, or between the intake port and the exhaust port.

3. An internal combustion engine comprising:

   an electromagnetic wave generator configured to generate an electromagnetic wave;
   a first plasma generator comprising a first boosting circuit and a discharge electrode, the first boosting circuit constituting a resonator configured to boost the electromagnetic wave inputted from the electromagnetic wave generator, and the discharge electrode of the first plasma generator being arranged at an output side of the first boosting circuit; and
   a second plasma generator comprising a second boosting circuit and a discharge electrode, the second boosting circuit configured to receive an electromagnetic wave reflected at a vicinity of the discharge electrode of the first plasma generator and constituting a resonator to boost the inputted electromagnetic wave, and the discharge electrode of the second plasma generator being arranged at an output side of the second boosting circuit,
wherein the internal combustion engine is configured such that the first and second plasma generators perform an ignition of fuel at a plurality of locations in the combustion chamber.

Fig. 1

Fig. 2

Fig. 3

Fig. 4

Fig. 5

Fig. 6

100

Fig. 7

Fig. 8

Fig. 9

## INTERNATIONAL SEARCH REPORT

| International application No. |
| --- |
| PCT/JP2015/073456 |

**A. CLASSIFICATION OF SUBJECT MATTER**

*F02P23/04*(2006.01)i, *F02B11/00*(2006.01)i, *F02B23/08*(2006.01)i, *F02P13/00* (2006.01)i

According to International Patent Classification (IPC) or to both national classification and IPC

**B. FIELDS SEARCHED**

Minimum documentation searched (classification system followed by classification symbols)
F02P23/04, F02B11/00, F02B23/08, F02P13/00

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 57-148022 A (Toyota Motor Co., Ltd.),<br>13 September 1982 (13.09.1982),<br>page 2, upper left column, line 20 to lower left column, line 18; page 3, upper left column, line 1 to upper right column, line 6; fig. 1 to 2<br>(Family: none) | 1-2<br>3 |
| Y<br>A | JP 2004-087498 A (Robert Bosch GmbH),<br>18 March 2004 (18.03.2004),<br>paragraphs [0002], [0022] to [0028]; fig. 1 to 2<br>& DE 10239414 A<br>paragraphs [0002], [0024] to [0029]; fig. 1 to 2 | 1-2<br>3 |

☒ Further documents are listed in the continuation of Box C.　　☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 November 2015 (24.11.15) | 08 December 2015 (08.12.15) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (July 2009)

## INTERNATIONAL SEARCH REPORT

International application No.

PCT/JP2015/073456

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2009-036198 A  (Imagineering, Inc.), 19 February 2009 (19.02.2009), paragraphs [0080] to [0085]; fig. 12 to 14 & US 2012/0258016 A1 paragraphs [0096] to [0104]; fig. 12 to 14 & WO 2009/008518 A1     & EP 2180176 A1 | 1 |
| A | JP 2013-015077 A  (Daihatsu Motor Co., Ltd.), 24 January 2013 (24.01.2013), paragraphs [0024] to [0043]; fig. 1 to 3 & US 2014/0224203 A1 paragraphs [0028] to [0047]; fig. 1 to 3 & WO 2013/005772 A1     & EP 2730775 A1 | 1-2 |
| A | WO 2012/105570 A1  (Imagineering, Inc.), 09 August 2012 (09.08.2012), paragraphs [0024] to [0057]; fig. 1 to 5 & US 2014/0041611 A1 paragraphs [0029] to [0062]; fig. 1 to 5 & EP 2672105 A1 | 3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013057279 A

- US 7963262 B

**Non-patent literature cited in the description**

- Development of Large Gas Engine with High Efficiency. Mitsui Engineering & Shipbuilding Co., Ltd, June 2007, 19-25